# EUROPEAN PATENT APPLICATION

(11) **EP 3 489 498 A1**
(43) Date of publication of application: **29.05.2019**
(21) Application number: 18197178.9
(22) Date of filing: 27.09.2018
(51) Int. Cl.: F02K 1/80, F02K 1/12

(54) **RETENTION OF A NOZZLE ASSEMBLY FOR AN ENGINE**

(30) Priority: 28.11.2017 US 201715824014
(71) Applicant: United Technologies Corporation, Farmington, CT 06032 (US)
(72) Inventor: SOBANSKI, Jon E, Glastonbury, CT Connecticut 06033 (US); MILLER, Andrew S, Marlborough, CT Connecticut 06447 (US); SLANEY, Brandon T, West Hartford, CT Connecticut 06107 (US)
(74) Representative: Dehns

(57) **Abstract**

A nozzle assembly (200, 400) comprises a frame (206, 306), a bearing (302) seated in a receptacle (304) of the frame (206, 306), the bearing (302) defining a first hole (312), a cam (210, 410) including a first flange (410C) and a second flange (410D), the first flange including a first surface (410C-1) and a second surface (410D-1) and defining a second hole (312) between the first surfaceand the second surface, the second flange defining a third hole (312), where the bearing (302) is disposed between the second surface of the first flange and the second flange, and a pin (214, 414) that includes a first portion (414A) and a second portion (414B), where the first portion projects through the first hole (312), the second hole (312), and the third hole (312), and where the second portion abuts the first surface of the first flange.

## Description

### BACKGROUND

Engines, such as those which power aircraft and industrial equipment, may employ a compressor to compress air that is drawn into the engine and a turbine to capture energy associated with the combustion of a fuel-air mixture. An engine may include a nozzle/nozzle section that exhausts gases resulting from the combustion from the engine.

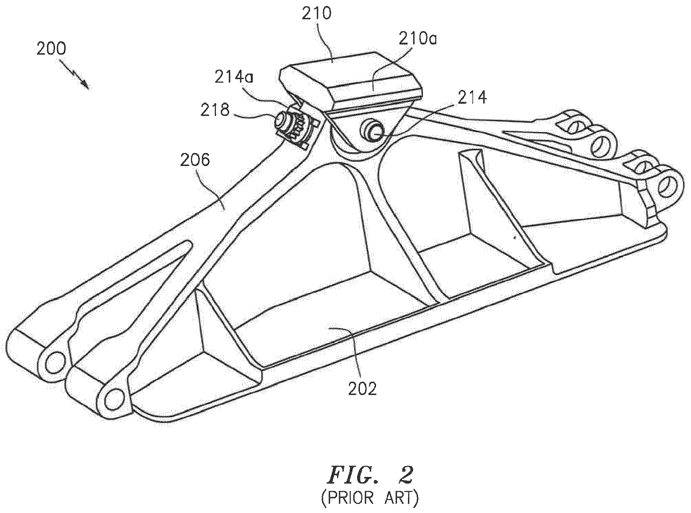

Referring to FIG. 2, components of a nozzle assembly 200 in accordance with the prior art are shown. In particular, a flap 202 (which may interface to the gases described above) is mounted relative to a frame/backbone 206. A cam 210 is retained to the frame 206 via a pin 214. The pin 214 is fixed relative to the frame 206 via a stud/nut combination 218. For example, the pin 214 includes a sheet metal piece 214a that is sandwiched/disposed between the frame 206 and the nut 218. As the cam 210 is secured by the pin 214, the cam 210 is also fixed to the frame 206 in all degrees of freedom expect a rotational degree of freedom about the pin axis.

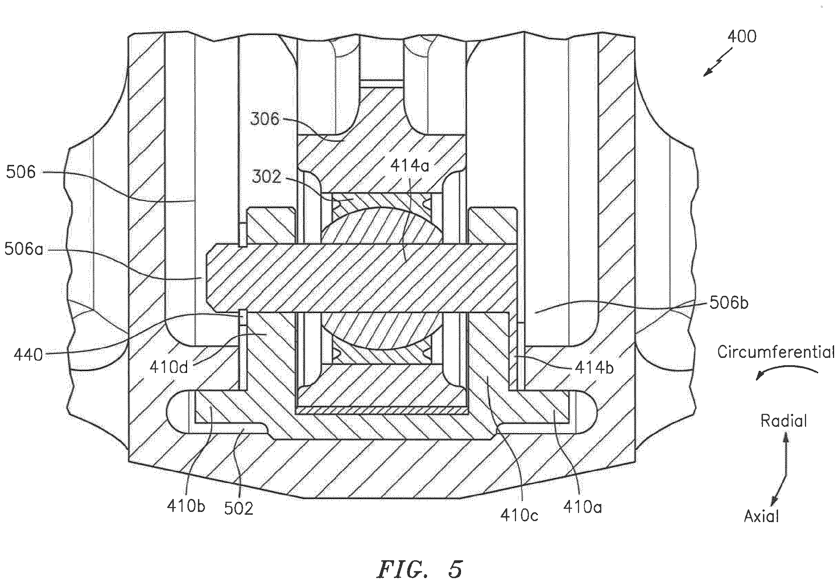

Due to component tolerances and deflections, misalignment may exist between two or more components of the nozzle assembly 200. For example, misalignment may exist between the frame 206 and the cam 210. The misalignment may manifest itself in one or more ways. For example, the misalignment could result in the cam 210 binding in a track (not shown in FIG. 2, but shown and described below in conjunction with FIGS. 5-6) in which the cam 210 is positioned, the pin 214 bending (e.g., snapping), or wear being imposed to a flange 210a of the cam 210.

Accordingly, what is needed is a nozzle assembly that accommodates misalignment between components. Furthermore, what is needed is a reliable arrangement for retaining a pin (e.g., the pin 214) of a nozzle assembly to ensure continued functionality/operability of a nozzle.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a nozzle assembly comprising: a frame, a bearing seated in a receptacle of the frame, the bearing defining a first hole, a cam including a first flange and a second flange, the first flange including a first surface and a second surface and defining a second hole between the first surface and the second surface, the second flange defining a third hole, where the bearing is disposed between the second surface of the first flange and the second flange, and a pin that includes a first portion and a second portion, where the first portion projects through the first hole, the second hole, and the third hole, and where the second portion abuts the first surface of the first flange. In some embodiments, the nozzle assembly further comprises a case that defines a track, and the cam including a third flange and a fourth flange, where the third flange and the fourth flange are seated in the track. In some embodiments, the nozzle assembly further comprises an actuator that causes the cam to translate from a first position of the track to a second position of the track. In some embodiments, a first sidewall of the case is proximate the first portion of the pin and a second sidewall of the case is proximate the second portion of the pin such that the first sidewall and the second sidewall retain the first portion of the pin in the second hole, the first hole, and the third hole. In some embodiments, the nozzle assembly further comprises a retaining ring mounted on the first portion of the pin and abutting a surface of the second flange. In some embodiments, the first surface of the first flange includes a recessed surface, and the second portion of the pin is seated in the recessed surface. In some embodiments, the cam includes a first edge and a second edge, and the recessed surface, the first edge, and the second edge prevent the pin from rotating in an amount greater than a threshold. In some embodiments, the bearing is a spherical bearing. In some embodiments, the pin floats relative to the frame such that the bearing accommodates a misalignment between the cam and the frame. In some embodiments, the nozzle assembly further comprises a flap mounted to the frame.

Aspects of the disclosure are directed to an engine having an axial centerline, comprising: a compressor section, a combustor section disposed aft of the compressor section, a turbine section disposed aft of the combustor section, and a nozzle section disposed aft of the turbine section, where the nozzle section includes a frame, a flap mounted to the frame, a spherical bearing seated in a receptacle of the frame, where the bearing defines a first hole, a cam including a first flange and a second flange, where the first flange defines a second hole and the second flange defines a third hole, and a pin that includes a first portion and a second portion, where the first portion projects through the first hole, the second hole, and the third hole, and where the second portion abuts a surface of the first flange, and where the pin floats relative to the frame. In some embodiments, the engine further comprises a fan section disposed forward of the compressor section. In some embodiments, the engine further comprises an augmenter section disposed aft of the turbine section, and an exhaust duct section disposed aft of the augmentor section and forward of the nozzle section. In some embodiments, the flap is a convergent flap. In some embodiments, the nozzle section includes a case that defines a track, and the cam includes a third flange and a fourth flange, and the third flange and the fourth flange are seated in the track. In some embodiments, the engine further comprises an actuator that causes the cam to translate from a first axial position of the track to a second axial position of the track. In some embodiments, a first sidewall of the case is proximate the first portion of the pin and a second sidewall of the case is proximate the second portion of the pin such that the first sidewall and the second sidewall retain the first portion of the pin in the second hole, the first hole, and the third hole. In some embodiments, the engine further comprises a retaining ring mounted on the first portion of the pin and abutting a surface of the second flange. In some embodiments, the surface of the first flange includes a recessed surface, and the second portion of the pin is seated in the recessed surface. In some embodiments, the cam includes a first edge and a second edge, and the recessed surface is disposed between the first edge and the second edge, and the recessed surface, the first edge, and the second edge prevent the pin from rotating in an amount greater than a threshold.

### BRIEF DESCRIPTION OF THE DRAWINGS

The present disclosure is illustrated by way of example and not limited in the accompanying figures in which like reference numerals indicate similar elements. The figures are not necessarily drawn to scale unless explicitly indicated otherwise.
FIG. 1 is a side cutaway illustration of a gas turbine engine that incorporates a nozzle section.
FIG. 2 illustrates a nozzle assembly in accordance with the prior art.
FIG. 3 illustrates a bearing that is seated in a frame of a nozzle assembly in accordance with aspects of this disclosure.
FIG. 4 illustrates components of a nozzle assembly in a partially exploded view/state in accordance with aspects of this disclosure.
FIG. 5 illustrates the components of the nozzle assembly of FIG. 4 in an assembled state with respect to a case in accordance with aspects of this disclosure.
FIG. 6 illustrates a block diagram of a cam traversing a track from a first position to a second position in accordance with aspects of this disclosure.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

In accordance with aspects of this disclosure, apparatuses, systems, and methods are described for accommodating for misalignment between two or more components of a nozzle assembly of an engine. In some embodiments, the nozzle assembly may include a bearing that provides for such an accommodation. In some embodiments, the bearing may be coupled to a cam via a pin. The pin may be retained in a given state/position via one or more retention mechanisms.

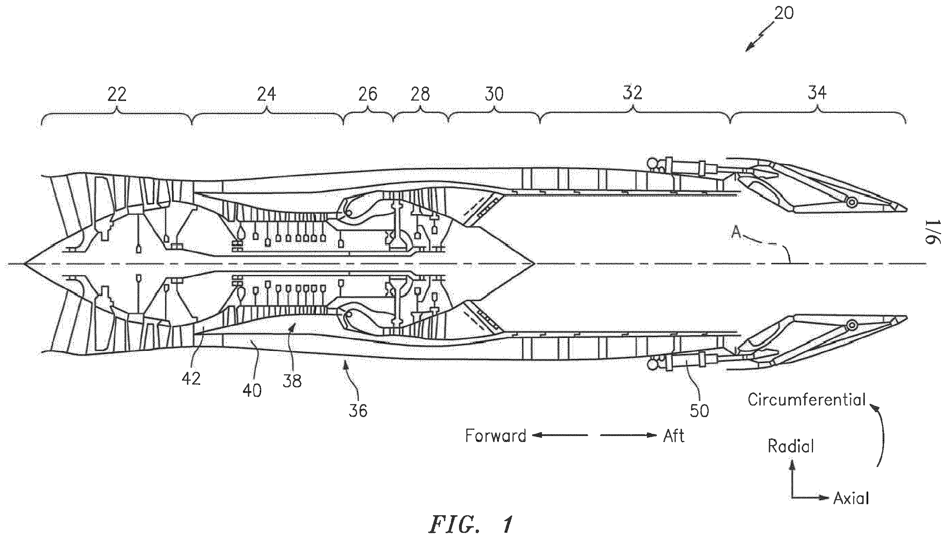

FIG. 1 schematically illustrates a gas turbine engine 20. The gas turbine engine 20 is disclosed herein as a two-spool low-bypass augmented turbofan that generally incorporates a fan section 22, a compressor section 24, a combustor section 26, a turbine section 28, an augmenter section 30, an exhaust duct section 32, and a nozzle section 34 along a central longitudinal engine axis A.

An outer structure 36 and an inner structure 38 define a generally annular secondary airflow path 40 around a core primary airflow path 42. Various structure and modules may define the outer structure 36 and the inner structure 38 which essentially define an exoskeleton to support the rotational hardware therein.

Air that enters the fan section 22 is divided between a core primary airflow through the core primary airflow path 42 and a secondary airflow through a secondary airflow path 40. The core primary airflow passes through the combustor section 26, the turbine section 28, then the augmentor section 30 where fuel may be selectively injected and burned to generate additional thrust through the nozzle section 34.

The secondary airflow may be utilized for a multiple of purposes to include, for example, cooling and pressurization. The secondary airflow as defined herein is any airflow different from the core primary airflow. The secondary airflow may ultimately be at least partially injected into the core primary airflow path 42 adjacent to the exhaust duct section 32 and the nozzle section 34.

In addition to the various cross-sections and the various longitudinal shapes, the exhaust duct section 32 may terminate in a Convergent/Divergent (C/D) nozzle, a non-axisymmetric two-dimensional (2D) C/D vectorable nozzle, a flattened slot nozzle of high aspect ratio, or other nozzle arrangement. These and other nozzle configurations are disclosed in U.S. patent application publication 2015/0122905, the contents of which are incorporated herein by reference.

The engine 20 may include one or more actuation systems/actuators (e.g., actuator 50) that may control (a flap of) the nozzle section 34. The actuator(s) 50 may be coupled to a cam of the nozzle as described further below.

FIG. 1 represents one possible configuration for an engine. Aspects of the disclosure may be applied in connection with other environments, including additional configurations for gas turbine engines. Aspects of the disclosure may be applied in connection with geared or non-geared engines.

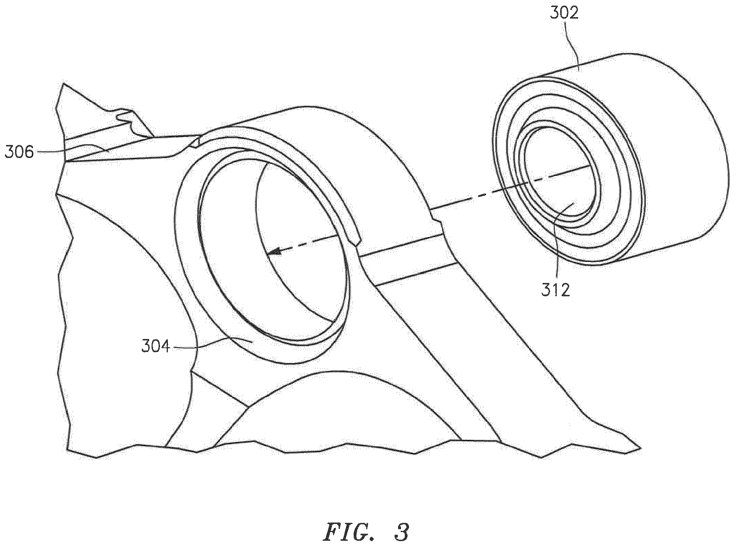

Referring to FIG. 3, a bearing 302 is shown. The bearing 302 may be a spherical bearing. The bearing 302 may be seated in a receptacle 304 of a backbone/frame 306. The frame 306 may be included as part of an engine, such as for example the engine 20 of FIG. 1. For example, the frame 306 may be included as part of the nozzle section 34 of the engine 20 and may be coupled to one or more flaps of the engine (e.g., flap 202 of FIG. 2). The frame 306 may be used as a drop-in replacement for the frame 206, which is to say that aspects of this disclosure may be used to retrofit legacy platforms/hardware.

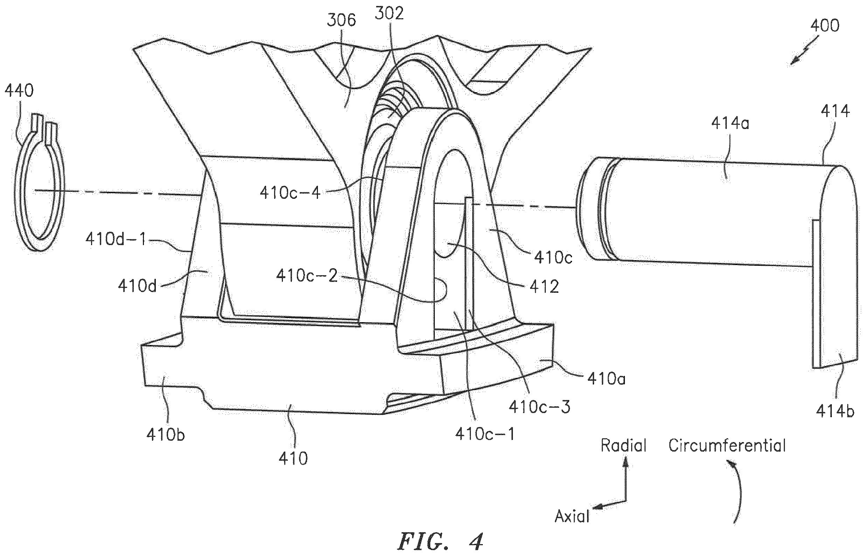

Referring to FIG. 4-5, a nozzle assembly 400 is shown. The nozzle assembly 400 may be included in a nozzle section of an engine, such as for example the nozzle section 34 of FIG. 1. Components of the nozzle assembly 400 are described below.

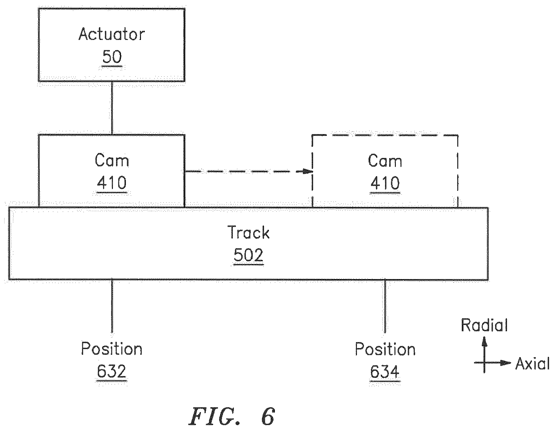

The nozzle assembly 400 may include the bearing 302 seated in the receptacle 304 of the frame 306 (see, e.g., FIG. 3). The nozzle assembly 400 may include a cam 410. The cam 410 may include a first flange 410a and a second flange 410b that may be seated in a channel/track 502 (FIG. 5) defined/included in a housing/case 506. The cam 410 may be coupled to an actuator (e.g., actuator 50 - see FIGS. 1 and 6), where the actuator may cause the cam 410 to assume a given position along the track 502. The actuator 50 may cause the cam 410 to translate (e.g., axially translate) from a first position 632 of the track 502 to a second position 634 of the track 502 (see FIG. 6). The particular position that is assumed by the cam 410 along the track 502 may be based on one or more control algorithms/mechanisms as would be appreciated by one skilled in the art. The position may be based on an operating state/condition of the engine.

The cam 410 may include a third flange 410c and a fourth flange 410d. The third and fourth flanges 410c and 410d may be oriented at an angle relative to, e.g., the first and second flanges 410a and 410b. For example, the third and fourth flanges 410c and 410d may be oriented at approximately 90 degrees relative to the first and second flanges 410a and 410b. Other values of the angle/orientation of the third and fourth flanges 410c and 410d relative to, e.g., the first and second flanges 410a and 410b may be used.

The third and fourth flanges 410c and 410d may each include/define a receptacle/hole (e.g., hole 412). The third flange 410c may include a first surface/face 410c-1 and an opposed second surface/face 410c-4. The bearing 302 may include/define a receptacle/hole, such as for example a hole 312 (see FIG. 3). Collectively, the hole of the bearing 302 and the respective holes of the third and fourth flanges 410c and 410d may accommodate/seat a pin 414. For example, the pin 414 may include a first portion 414a that may project through the holes of the bearing 302 and the third and fourth flanges 410c and 410d.

A second portion 414b of the pin 414 may extend from the first portion 414a and may be seated in/abut the face 410c-1 (e.g., a recessed surface/face) of the third flange 410c. The third flange 410c may include one or more sidewalls/edges, such as for example edges 410c-2 and 410c-3. The surface 410c-1 may be disposed between the edges 410c-2 and 410c-3. The surface 410c-1 and the edges 410c-2 and 410c-3 may prevent the pin 414 from rotating in an amount greater than a threshold (e.g., the surface 410c-1 and the edges 410c-2 and 410c-3 may provide for anti-rotation with respect to the pin 414). In operation, the anti-rotation features may force any potential wear to be imposed on the pin 414 relative to, e.g., the cam 410. As the pin 414 may be relatively inexpensive, it may be beneficial to cause any such potential wear to be imposed on the pin 414. Stated differently, it may be more cost-effective to potentially replace the pin 414 relative to the cam 410 (or any other component).

A retaining ring 440 (which may also be referred to as a snap ring) may be mounted to the pin 414 (e.g., the first portion 414a of the pin 414). The retaining ring 440 may be seated against/abut a surface 410d-1 of the fourth flange 410d. The retaining ring 440 may serve as a first retention mechanism with respect to the pin 414.

The case 506 may serve as a second retention mechanism with respect to the pin 414. For example, sidewalls 506a and 506b of the case 506 that are proximate to the pin 414 (e.g., the first portion 414a and the second portion 414b, respectively) may prevent the pin 414 from falling out of the holes of the bearing 302 and the third and fourth flanges 410c and 410d. In this respect, even if the retaining ring 440 is not present or becomes inoperable, the pin 414 will still be retained. A clearance between the pin 414 and the sidewalls 506a and 506b may be sized/dimensioned to ensure that the pin 414 is retained under worst-case conditions (e.g., a worst-case misalignment condition).

The retaining ring 440 may help to prevent wear/rubbing between the pin 414 and the sidewalls 506a and 506b by helping to retain the pin 414 in a fixed/stationary position relative to, e.g., the cam 410. The retaining ring 440 may help ensure that a sufficient clearance (e.g., a clearance in an amount greater than a threshold) exists between the pin 414 and the sidewalls 506a and 506b.

The retention of the pin 414 by the retaining ring 440 and/or the sidewalls 506a and 506b may be provided without the need for a separate/second fastener, thereby reducing (e.g., minimizing) cost, weight, and assembly complexity.

The arrangement shown in FIGS. 3-5 enables the bearing 302 to accommodate potential misalignment that may exist between other components of the nozzle (e.g., misalignment between the cam 410 and the frame 306). Such an accommodation may be based on a coupling (e.g., mating) of the pin 414 to the cam 410 and a decoupling of the pin 414 relative to the frame 306. In other words, whereas in FIG. 2 the pin 214 is fixedly attached to the frame 206, in FIGS. 4-5 the pin 414 is not fixedly attached to or in contact with the frame 306. Stated slightly differently, the pin 414 may float relative to the frame 306.

In some embodiments, the components shown in FIGS. 3-5 may be replicated/duplicated in an engine. For example, in some embodiments between ten and twenty instances of the components of FIG. 4-5 may be replicated around the circumference of the engine about the engine centerline.

The components shown in FIG. 3-5 may be made of one or more materials. For example, the components may include one or more metals (e.g., aluminum, steel, nickel, titanium), composite materials, etc.

Aspects of the disclosure have been described in terms of illustrative embodiments thereof. Numerous other embodiments, modifications, and variations within the scope and spirit of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A nozzle assembly comprising:
a frame;
a bearing seated in a receptacle of the frame, the bearing defining a first hole;
a cam including a first flange and a second flange, the first flange including a first surface and a second surface and defining a second hole between the first surface and the second surface, the second flange defining a third hole, where the bearing is disposed between the second surface of the first flange and the second flange; and
a pin that includes a first portion and a second portion, where the first portion projects through the first hole, the second hole, and the third hole, and where the second portion abuts the first surface of the first flange.

2. The nozzle assembly of claim 1, further comprising:
a case that defines a track; and
the cam including a third flange and a fourth flange,
where the third flange and the fourth flange are seated in the track.

3. The nozzle assembly of claim 2, further comprising:
an actuator that causes the cam to translate from a first position of the track to a second position of the track.

4. The nozzle assembly of claim 2 or 3, where a first sidewall of the case is proximate the first portion of the pin and a second sidewall of the case is proximate the second portion of the pin such that the first sidewall and the second sidewall retain the first portion of the pin in the second hole, the first hole, and the third hole.

5. The nozzle assembly of claim 4, further comprising:
a retaining ring mounted on the first portion of the pin and abutting a surface of the second flange.

6. The nozzle assembly of any preceding claim, where the first surface of the first flange includes a recessed surface, and where the second portion of the pin is seated in the recessed surface where, optionally, the cam includes a first edge and a second edge, and where the recessed surface, the first edge, and the second edge prevent the pin from rotating in an amount greater than a threshold.

7. The nozzle assembly of any preceding claim, where the bearing is a spherical bearing.

8. The nozzle assembly of any preceding claim, where the pin floats relative to the frame such that the bearing accommodates a misalignment between the cam and the frame.

9. The nozzle assembly of any preceding claim, further comprising:
a flap mounted to the frame.

10. An engine having an axial centerline, comprising:
a compressor section;
a combustor section disposed aft of the compressor section;
a turbine section disposed aft of the combustor section; and
a nozzle section disposed aft of the turbine section,
where the nozzle section includes
a frame;
a flap mounted to the frame, wherein the flap is optionally a convergent flap;
a spherical bearing seated in a receptacle of the frame, where the bearing defines a first hole;
a cam including a first flange and a second flange, where the first flange defines a second hole and the second flange defines a third hole; and
a pin that includes a first portion and a second portion, where the first portion projects through the first hole, the second hole, and the third hole, and where the second portion abuts a surface of the first flange, and where the pin floats relative to the frame.

11. The engine of claim 10, further comprising:
a fan section disposed forward of the compressor section; and/or
an augmenter section disposed aft of the turbine section, and an exhaust duct section disposed aft of the augmentor section and forward of the nozzle section.

12. The engine of claim 10 or 11, where the nozzle section includes a case that defines a track, and where the cam includes a third flange and a fourth flange, and where the third flange and the fourth flange are seated in the track, wherein the engine optionally further comprises:
an actuator that causes the cam to translate from a first axial position of the track to a second axial position of the track.

13. The engine of claim 12, where a first sidewall of the case is proximate the first portion of the pin and a second sidewall of the case is proximate the second portion of the pin such that the first sidewall and the second sidewall retain the first portion of the pin in the second hole, the first hole, and the third hole.

14. The engine of claim 13, further comprising:
a retaining ring mounted on the first portion of the pin and abutting a surface of the second flange, where, optionally, the surface of the first flange includes a recessed surface, and where the second portion of the pin is seated in the recessed surface.

15. The engine of claim 14, where the cam includes a first edge and a second edge, and where the recessed surface is disposed between the first edge and the second edge, and where the recessed surface, the first edge, and the second edge prevent the pin from rotating in an amount greater than a threshold.
